# EUROPEAN PATENT APPLICATION

(11) **EP 0 689 198 A2**
(43) Date of publication of application: **27.12.1995**
(21) Application number: 95303919.5
(22) Date of filing: 07.06.1995
(51) Int. Cl.: G11B 5/58, G11B 5/48

(54) **Hard disk drive transducer-slider having controlled contact bearing with controlled pitch and roll**

(30) Priority: 20.06.1994 US 262597
(71) Applicant: QUANTUM CORPORATION, Milpitas California 95035 (US)
(72) Inventor: Higgins, Bill E., Palo Alto, California 94303 (US)
(74) Representative: Goodman, Christopher

(57) **Abstract**

A hard disk drive transducer-slider assembly forms a controlled contact bearing with a rotating magnetic data storage disk surface. The assembly comprises a flying plane on one surface thereof opposed to the magnetic data storage disk surface, and has a leading edge and a trailing edge, and a pair of longitudinal, parallel rails and a loading point configured to provide controlled non-zero roll and pitch angles so that the trailing edge of one of the pair of rails including a magnetic data transducer element has a lowest mechanical spacing relative to the disk and flies at a lowest altitude in contact with asperity peaks of the magnetic data storage disk surface.

## Description

### Field of the Invention

The present invention relates to the field of disk drives. More particularly, the present invention relates to a thin film magnetic data transducer head and slider structure which is formed to fly in controlled contact with asperity peaks of the rotating data recording disk surface and with controlled pitch and roll, and also relates to a method for making the head and slider structure so that it operates in controlled contact with the disk surface.

### Background of the Invention

Computer systems employ a variety of storage devices and appliances to store system, program and user data. One of these storage devices is known as a hard disk drive. A hard disk drive employs one or a plurality of smoothly finished, rotating disks which carry magnetic storage media on their major surfaces. Each surface is typically divided into a multiplicity of circular data storage tracks concentric with the axis of rotation of the rotating disk. Each track is typically divided up into evenly spaced apart angular divisions, or "sectors". The division may reflect predetermined length of a user data block, or it may represent a predetermined sampling interval between adjacent embedded servo sectors which provide head position information to a head positioning servo loop.

A transducer-slider structure includes an electromagnetic transducer formed and carried at a rear end of one rail of a slider, known as the "active" rail. Another rail, known as the "ballast" rail, does not include an actively connected transducer, although a non-used transducer may be formed at the trailing edge thereof. In the present example, the transducer is formed as a thin film deposition by techniques similar to integrated circuit (IC) fabrication techniques, although other transducer designs are known, including metal-in-gap, and a composite two-part transducer including a thin film inductive write element upon which a thin film magnetoresistive read element is formed. During writing, user data from the host computer system is translated into a series of electrical current pulses by the transducer. The pulses pass through a coil of the transducer and become magnetic fields which are imposed or written as magnetic domains or magnets within the magnetic media of the selected track of the storage surface passing by the head. During reading, as recorded magnets on the storage surface pass by the head, flux fields thereof are picked up as minute electrical signals by the transducer. These minute signals are amplified, shaped and processed into user data which is then delivered to the host computer system.

The transducer-slider structure typically includes two or three longitudinal regions or "rails" and thereby manifests desired aerodynamic properties in order to enable it to fly in very close proximity above the surface of the rotating data storage disk upon an air bearing in accordance with what has come to be known in the art as "Winchester" or "flying head" technology. One advantage of this technology is that it enables the transducer electromagnet to operate very close to the storage surface, without unduly contacting it and abrading it, thereby realizing a storage appliance which operates reliably over an extended useful life. Flying heights as low as below four microinches, or lower, are realized with contemporary Winchester air bearing technology.

The transducer-slider structure is positioned over the data storage surface by a head positioner actuator, such as a rotary voice coil actuator positioner. The actuator positioner includes a head-gimbal assembly which enables the transducer-slider structure to manifest pitch and roll characteristics, while being maintained precisely in position radially relative to the rotating disk surface. The actuator positioner rapidly displaces the transducer-slider structure from a departure track to a destination track during track seeking operations; and, it maintains the transducer-slider structure in registration with the destination track during subsequent data writing or reading operations. These positioning operations are controlled in large part by transducer position information read by the transducer as it passes over each embedded servo sector within each data track.

The conventional design for a hard disk drive slider utilizes a two rail, taper flat air bearing which is created by machining a slider row bar. This slider design and slider row bar machining process has been available for a number of years, and hundreds of millions of sliders of this basic design have been manufactured and used. One example of a conventional two-rail slider in accordance with contemporary prior art techniques is described in U.S. Patent No. 4,928,195 to Ezaki et al., entitled "Improved Floating Magnetic Head For High Density Recording", the disclosure thereof being incorporated herein by reference.

In magnetic recording the areal data storage density capability depends critically on the mechanical spacing between the transducer-slider structure used for writing and reading and the magnetized disk media providing information storage. The challenge has therefore always been to devise ways to reduce this spacing to be as small as possible; and, air bearings are in present widespread use in hard disk drives. In order to increase the areal storage density future disk drives will have the spacing between transducer-slider and disk surface reduced even further, and air bearings will have ever lower clearances.

Currently, magnetic data storage disks are formed of precisely formed aluminum alloy, glass or ceramic substrates upon which magnetic media layers and protective overcoat layers are deposited as thin films by sputtering techniques. While contemporary manufacturing processes yield data storage surfaces which are exceedingly flat and smooth, when observed microscopically, the surfaces manifest peaks and valleys. One way to minimize the air bearing clearance is to permit a portion of the head-slider structure to be in substantially continuous contact with the peaks or highest points of the data storage surface. This contact between the transducer-slider structure and the rotating data storage surface of the disk is referred to herein as "controlled contact". Controlled contact between the slider and the disk is also referred to in the art as "pseudo contact" and "virtual contact".

Recently, a "tripad" bearing transducer-slider structure has been announced and offered by a head manufacturer, Read-Rite Corporation, Milpitas, California. Their tripad bearing is said to operate in pseudo contact with the disk storage surface. This tripad bearing structure is one method for insuring pseudo contact, but involves compromises in manufacturing (the tripad design requires many non-orthogonal cuts) and drive integration (a single transducer is located at the center of the slider in order to minimize the impact of slider roll on electrical spacing between head and storage surface). These manufacturing and drive integration complications add a significant cost to the tripad design over conventional two rail slider design, and this deviation from conventional two rail technology has proven to be a barrier to acceptance by both slider manufacturers and disk drive designers.

Fly height control in disk drive products involves a very delicate balance between drive design, media design, and head-gimbal assembly design. Presently, commercial Winchester disk drive products require some positive margin between the highest point on the media surface and the lowest point on the slider in order to allow for manufacturing tolerances. This margin is known in the art as "positive glide margin", and it must be carefully managed to achieve a successful hard disk drive product. If glide margin is made too small, reliability problems can occur in the drive. If glide margin is made too great, the result will likely be lower areal data storage density, and a commercial failure.

Thus, a hitherto unsolved need has remained for an improved transducer-slider structure which operates in controlled contact with the disk storage surface, which may be manufactured without undue or unusual formation steps or processes, and which provides suitable pitch and roll characteristics.

### Summary of the Invention with Objects

One object of the present invention is to simplify manufacture of a transducer-slider assembly having a controlled contact bearing.

Another object of the present invention is to provide a non-planar roll and pitch flying characteristic to a transducer-slider assembly such that an active rail thereof which includes the transducer will always have the lowest mechanical spacing (flying height) of any portion of the slider, guaranteeing that there will be no unnecessary mechanical risk and that all reduction in spacing results in a corresponding gain in electrical performance.

A further object of the present invention is to provide a transducer-slider assembly which eliminates a requirement for positive glide margin, as the slider will actually be in controlled contact with, and supported by, a rotating magnetic data storage disk.

One more object of the present invention is to provide a transducer-slider assembly, the manufacture of which involves only machined orthogonal cuts on the air bearing surface, and involves only a very minor adjustment of a conventional air bearing slider creation process and without need for etching steps, and the like.

Accordingly, a hard disk drive transducer-slider assembly forms a controlled contact bearing with a rotating magnetic data storage disk surface. The assembly comprises a flying plane on one surface thereof opposed to the magnetic data storage disk surface, and has a leading edge and a trailing edge, and a pair of longitudinal, parallel rails and a loading point configured to provide controlled non-zero roll and pitch angles so that the trailing edge of one of the pair of rails including a magnetic data transducer element has a lowest mechanical spacing relative to the disk and flies at a lowest altitude in contact with asperity peaks of the magnetic data storage disk surface.

In one preferred form, an active rail of the pair of rails has a predetermined width, is congruent with a length of the slider assembly and has the magnetic data transducer at a trailing edge thereof, and a ballast rail of the pair has a width greater than the predetermined with and is truncated at the trailing edge of the slider assembly.

In one aspect of this preferred form, the slider is relieved to define the pair of rails, and is relieved to define a truncation region adjacent to the ballast rail at the trailing edge. In another aspect of this preferred form, the slider assembly is grooved across the trailing edge adjacent to the ballast rail, thereby to define the truncation region.

This new bearing simplifies the manufacture of a controlled contact bearing slider which insures that the transducer pole region is in controlled contact with the rotating disk storage media. This new design highly leverages the mature taper flat bearing creation process involving only orthogonal cuts, and adds one additional step to create the preferred truncated ballast slider rail. The creation of this truncation region can be carried out in a variety of ways, with a basic tradeoff occurring between reduced selectivity of good transducers with high manufacturing throughput on the one hand, and perfect selectivity of good transducers with reduced manufacturing throughput on the other.

These and other objects, advantages, aspects and features of the present invention will be more fully understood and appreciated upon consideration of the following detailed description of a preferred embodiment, presented in conjunction with the accompanying drawings.

### Brief Description of the Drawings

In the Drawings:
Fig. 1 is an enlarged isometric view of an air bearing slider in accordance with one preferred embodiment of the present invention.
Fig. 2 is a trailing edge view in elevation of a slider in mirror image of the Fig. 1 slider.
Fig. 3 is a view in right side elevation of the Fig. 2 slider.
Fig. 4 is a highly diagrammatic plan view of a slider wafer during a fabrication process.
Fig. 5 is a greatly enlarged view in section and elevation of one data transducer head element formed on the Fig. 4 slider wafer during transducer fabrication process steps.
Fig. 6A is an enlarged, diagrammatic edge plan view of a portion of a slider bar cut from the Fig. 4 wafer after transducer fabrication and secured to a support tool for subsequent slider level processing.
Fig. 6B is an end (air bearing surface) view in elevation of the Fig. 6A slider bar portion.
Fig. 7 is an air bearing surface plan view of a transducer-slider formed in accordance with one preferred embodiment of the present invention.
Fig. 8 is an air bearing surface plan view of a transducer-slider formed in accordance with a second preferred embodiment of the present invention.
Fig. 9 is an enlarged, somewhat diagrammatic view in side elevation of another preferred embodiment of the present invention, illustrating one manner for forming the truncation region relative to the ballast slider rail.

### Detailed Description of a Preferred Embodiment

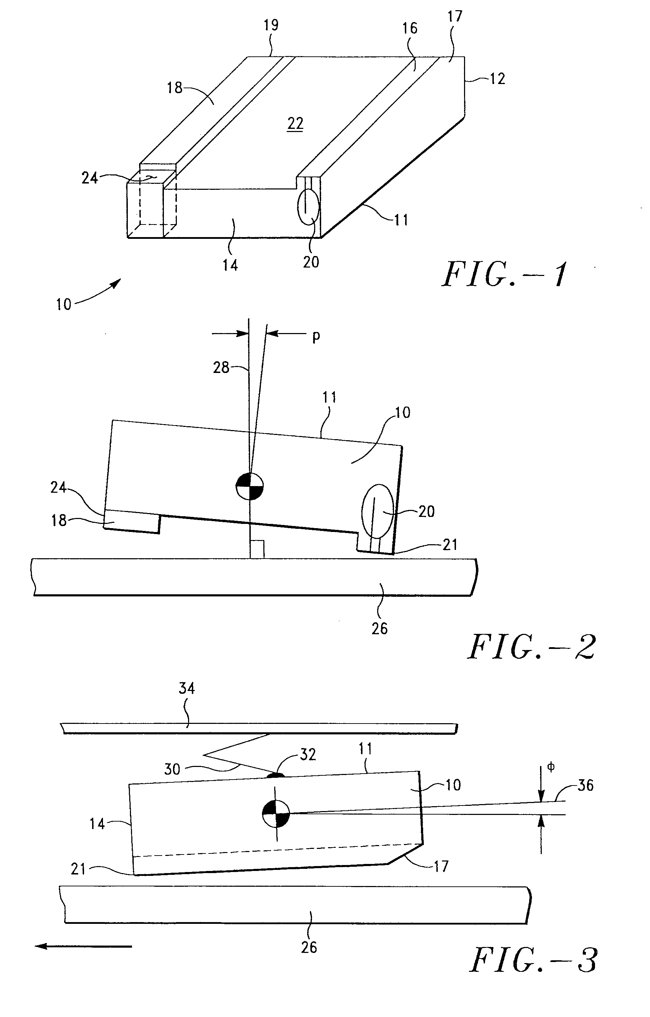

Fig. 1 illustrates a controlled contact slider 10 for use within a hard disk drive employing magnetic storage technology. By "controlled contact" is meant that the slider is supported by contacts with asperity (minute imperfection) peaks on the rotating disk storage surface. The slider 10 is formed in accordance with principles of the present invention in order to achieve controlled contact with the data storage surface of the rotating disk with which it is operatively associated. As formed, the slider 10 includes a top surface 11, a leading edge end 12, a trailing edge end 14, a full-length slider rail 16, a truncated, widened slider rail 18 and a data transducer head structure 20. The slider rails 16 and 18 respectively include leading edge ramps 17 and 19 formed at the leading edge 12. The ramps 17 define a very shallow angle, such as 30 to 50 minutes, relative to the plane of the surfaces of the slider rails 16 and 18 (known in the art as "air bearing surface" or "ABS"). The rails 16 and 18 are defined by relieving a central region, generally indicated by the reference numeral 22 in Fig. 1, of the incomplete slider to a desired depth.

The slider 10 is attached at a predetermined load point on its top surface 11 to a gimbal or flexure 30 by a dab e.g. of silver epoxy 32. The flexure 30 is attached in turn to a load beam 34 which provides a predetermined preload force through the flexure 30 to the slider 10, to force it towards the surface of a data disk 26, see Fig. 3. Ideally, the flexure 30 permits the slider 10 to rotate relative to a longitudinal axis (roll) (Fig. 2) and to rotate relative to a transverse axis (pitch) (Fig. 3), but maintains slider stiffness in all other dimensions of possible relative movement. Examples of load beam structures and gimbals are provided in commonly assigned U.S. Patent No. 5,027,241 to Hatch et al., entitled: "Data Head Load Beam for Height Compacted, Low Power Fixed Head and Disk Assembly", the disclosure thereof being incorporated herein by reference.

When the disk 26 is rotated at a controlled velocity relative to the slider 10, (in a relative direction denoted by the arrow below the disk 26 in Fig. 3) an air bearing is formed between the highly polished ABS formed by the slider rails 16 and 18 and the highly polished surface of the disk 26. This air bearing is sufficient to generate a reaction force which overcomes the preload force exerted by the load beam 34 and enables the slider 10 to "fly" at a very low relative altitude over the magnetic data storage surface of the disk 26, on the order of less than one to several micro-inches of flying height.

It is known in the Winchester hard disk drive art that the closer the data transducer may be brought towards the storage surface, the more user data information may be stored on the data storage surface within the same unit area. This storage capability is known as "areal density" in the art. While the data storage surface of the disk 26 is polished to a very high degree of smoothness, such as on the order of about 50 Angstroms roughness average, asperities (peaks and valleys) remain. It is an object of the present invention to configure and fly the slider 10 so that the trailing edge 21 adjacent to the electromagnetic transducer 20 is in contact with the asperity peaks of the disk surface, and in effect, slides from peak to peak in what is herein referred to as "controlled-contact" therewith. The lowermost trailing edge, denoted by reference numeral 21 in Fig. 2, is adjacent the transducer element 20, so that the transducer 20 may be as close as possible to the data storage surface, and thereby achieve increased data storage density on the magnetic data storage surface of the disk 26.

Conventionally, a slider will include two spaced-apart, full length, equal width rails extending from the leading edge to the trailing edge of the slider. In a conventional, symmetrical slider, flying height above the rotating disk is such that a roll angle ρ is zero, while a pitch angle φ is a very acute angle, not more than one or a few minutes, relative to the rotating disk storage surface. In order to achieve controlled contact flying conditions, it is necessary to alter in a controlled manner the pitch and roll characteristics of the slider 10, so that the lowermost trailing edge 21 of the slider achieves controlled contact with the rotating disk storage surface as desired. In order for the trailing edge 21 of the active slider rail 16 to be the only portion of the slider 10 to fly in controlled contact with the data surface of the disk 26, it is desirable to remove the unused head structure and a portion of the ballast rail 18 adjacent to the slider's trailing edge 14. This area is referred herein as a "truncation" area or region, and is denoted generally by the reference numeral 24. One consequence of removal of the inactive corner truncation region 24 is that aerodynamic lift is lost at that region. In order to counteract loss of lift at the truncation region the width of the active rail 16 is narrowed relative to the width of the ballast rail 18, or the width of the ballast rail 18 is widened relative to the active rail 16. Either approach enables the slider 10 to achieve desirable roll characteristics which results in controlled contact between the trailing edge 21 of the active slider rail 16 with the asperity peaks of the storage surface of the disk 26.

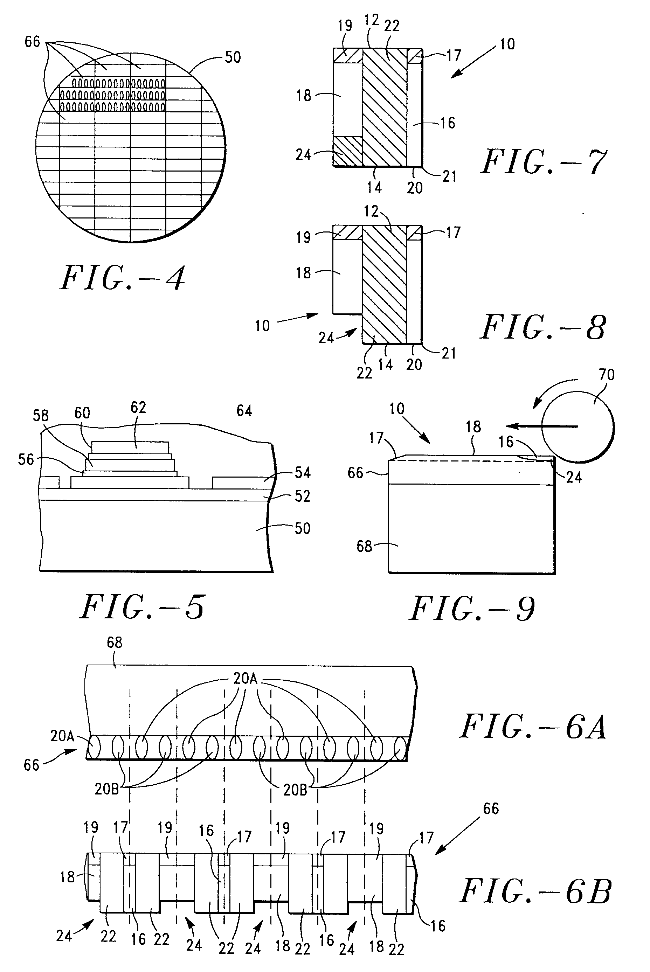

There are at least two ways that the truncation region 24 may be formed. The slider 10 may be machined in such a manner that the truncation region 24 and the relieved center portion 22 are all at the same plane or depth below the ABS plane. In Fig. 7, the truncation region 24 is defined as a relieved area, to a predetermined depth which may be approximately the same depth as the main relieved area 22 (although relief to this depth is not required). Alternatively, the slider material may be completely removed at the truncation region 24, as by completely notching the corner of the slider 10. In the present invention, a slight advantage results from a deeper notching of the corner of the slider 10, because it is important that the trailing edge 21 carrying the transducer 20 has the lowest flying height of any portion of the slider 10. Also, a larger roll angle may be tolerated after removal of all slider material at the truncation region 24. In one preferred embodiment of the present invention, a rear portion of the wider rail 18 is completely removed, thereby truncating the rail 18 and forming a notch, as shown for example by the dashed outline in Fig. 1, and in the ABS plan view of Fig. 8.

In order to control the roll angle, i.e. an angle ρ formed between a perpendicular longitudinal plane 28 and the slider 10 as shown in Fig. 2, the slider rail 16 carrying the transducer 20 at its trailing edge 21 must generate less reaction force from its air bearing than is generated by the other rail (or rails). In the present example, the active slider rail 16 is made narrow, and generates less reaction force; and, the ballast slider rail 18 is made wide, and generates more reaction force. These differences in rail width cause the slider 10 to roll in a controlled fashion to a desired, controlled roll angle ρ during flying operations when the disk 26 is rotating relative to the slider 10. In Fig. 2, the roll angle ρ is shown relative to a plane 28 normal to the data disk 26. In practice, the roll angle ρ is such that the ballast slider rail 18 is flying above the surface of the disk by e.g. about 3 microinches (as measured at the trailing edge of the rail 18), while the trailing edge of the full length active, narrow rail 16 is flying in controlled contact with asperity peaks on the surface of the rotating disk 26, at an altitude of about one micro inch, or less, average flying height.

One other technique for controlling roll angle ρ and pitch angle φ of a twin-rail slider, such as the slider 10, in order to achieve desired controlled contact between the trailing edge 21 and the asperity peaks of the disk surface is to adjust the load point 32 for applying the preload force to the slider via the gimbal 30 and load beam 34 at a location displaced from a center of mass of the slider 10. The load point may be displaced from the center of mass in order to ensure that the desired roll angle ρ (as shown in Fig. 2) and pitch angle φ (as shown in Fig. 3) are achieved during flying operations. The pitch angle φ is selected so that the leading edge of the slider 10 is about 10 microinches above the disk surface, while the controlled contact trailing edge 21 averages about one micro inch above the disk surface.

Fig. 4 illustrates wafer-level processing used to form the transducer-slider 10. The wafer-level processing is very similar to the processes used to form conventional thin film inductive or thin film inductive write/magnetoresistive read transducer elements. Initially, the transducer elements 20 are formed in rows and columns upon a round, square or rectangular wafer of suitable slider substrate material, such as an aluminum-titanium-carbide ceramic blank. Other materials could also be used for the substrate, such as silicon-carbide, calcium titanate, or manganese-nickel-zinc ferrite, etc. A round substrate 50 is diagrammed in Fig. 4. The substrate 50 is made to be very thin and flat, and its major surfaces have been lapped and polished to a satisfactory level of smoothness, such as 50 Angstroms roughness average, for example. During wafer processing, a series of process steps selectively deposit and etch conductor material, insulation material, ferromagnetic pole material and overcoat, in forming the read/write transducer element. These process steps are carried out using known deposition and selective etch techniques which are similar to the thin film processing techniques used to form integrated circuit semiconductors.

For example, in Fig. 5, the finished substrate 50 of alumina-titanium-carbide is electrically conductive. Accordingly, an insulator layer 52, e.g. of alumina ceramic is formed on the exposed surface of the substrate 50. A copper layer is then deposited on the alumina layer 52, and is patterned using known photoresist techniques, and etching, to yield a patterned copper conductor layer 54. In the end, the patterned copper conductor layer 54 will be intertwined between ferromagnetic pole layers 58 and 62 which provide a magnetic yoke and gap structure as is conventional with thin film inductive read/write transducer design. Thin insulating layers 56 and 60 separate the magnetic pole pieces 58 and 62, and an insulator layer 64 e.g. of alumina may be provided as a protective overcoat. Since transducer formation is not directly a part of the present invention, it is described herein only by way of broad outline. In practice, there may be numerous process steps and intermediates in forming a useful thin film transducer structure, whether inductive read/write or inductive write/magnetoresistive read. Very different process steps are also employed to form metal-in-gap transducers, but this known type of transducer can also be advantageously formed on or carried by a slider in accordance with principles of the present invention. The following table sets forth dimensions for conventional two-rail slider form factors which are followed by the controlled contact slider 10 of the present invention:

**Table**

| Slider Dimensions | | | | |
|---|---|---|---|---|
| Form Factor | Units | Length | Width | Thickness |
| 100 % minislider | mm | 4.064 | 3.200 | 0.864 |
| 70% microslider | mm | 2.845 | 2.235 | 0.610 |
| 50% microslider | mm | 2.032 | 1.600 | 0.432 |
| 30% picoslider | mm | 1.250 | 1.000 | 0.300 |

Once the wafer 50 is patterned with the matrix of transducers, the wafer 50 is divided up into "row bars" 66 by sawing along row and column lines, as shown in Fig. 4. Typically, each row bar 66 may include e.g. 24-36 candidate sliders, only a very few of which are shown in Fig. 6A, as divided by the dashed lines. Each candidate slider in Fig. 6A is shown as having two candidate transducers: 20A and 20B. When the slider 10 is completed, only one transducer will be employed for reading/writing operations in the completed hard disk drive. As assembled, the disk drive includes a head stack or a vertically aligned comb of heads and load beams. Sliders 10 facing upwardly toward a disk surface will have e.g. the arrangement shown in Fig. 1. Sliders 10 facing downwardly toward a disk surface will have a mirror image arrangement to Fig. 1, as with the Fig. 2 slider 10. Thus, the slider wafer 50 may be formed to define only upwardly facing sliders, or downwardly facing sliders, or it may define universal slider candidates which are later tested, graded, and separated into either upwardly facing sliders or downwardly facing sliders. Conventionally, functionality of the transducers 20 is usually first tested at the row bar level 66.

Since each row bar 66 is very thin and narrow, it is conventional to glue the top surface 11 of the row bar 66 to a tool 68. The tool 68 is made to be the same width and length as the attached slider bar 66, but extends to a much greater relative depth, thereby to provide adequate mechanical reinforcement of the slider bar 66 to prevent it from bending or breaking during subsequent processing. Fig. 6A shows the row bar 66 in attachment with the tool 68 before the ABS is contoured. Fig. 6B shows the ABS of the row bar after orthogonal contouring to define the longitudinal rails 16 and 18, ramps 17 and 19, relieved main area 22 and truncation regions 24.

In practice, rows of row bars 66 and tools 68 are precisely clamped together as a matrix, and a gang saw or grinder (shown as gang saw 70 in Fig. 9) is passed orthogonally over the matrix, e.g. along cutting paths parallel to the dashed lines of Fig. 6B, in order to define the main relieved area 22 separating the remaining slider rails 16 and 18 of each candidate slider. Once the ABS contouring of the rails 16 and 18 and relieved main area 22 is completed at the row bar-matrix level, the row bars 66 are again separated into individual bars, and the ramp surfaces 17 and 19 are formed, as by canting the individual row bar 66 at the desired angle and bringing the ABS into contact with a lapping plate or surface, or by controlled sawing by the gang saw 70, thereby to abrade the rail surfaces to form the ramps 17 and 19.

In the example of Fig. 6B it was determined during row bar testing that all of the candidate transducers 20 are usable, and it becomes efficient to define the truncation regions by notching unseparated adjacent slider candidates, so that one of an adjacent pair becomes an upwardly facing slider, and the other of the adjacent pair becomes a downwardly facing slider. The truncation region can alternatively be determined on the basis of testing of individual transducer candidates 20A and 20B to see which one of them works best for any given slider candidate. After the slider candidates are completely configured mechanically, they are separated into individual sliders e.g. by the gang saw 70 which divides the Fig. 6B row bar 66 into individual transducer-sliders 10 along the dashed lines. The individual sliders are then separated from the tool 68 and tested electrically, as well as visually inspected.

There are several preferred processes to form each truncation region 24. These processes are as follows:
A. Wafer Level Grooving. Returning to Fig. 4, before the wafer 50 is separated into individual slider bars 66, grooves are machined e.g. by a gang saw into the surface of the wafer to a controlled depth. This process has the effect of removing all of the material at the truncation region 24, as shown in Fig. 1 outline, and Figs. 6B and 8.
B. Row Bar Notching. Returning to Fig. 6B, at the individual row bar process level a gang saw 70 can be applied to notch the corner of each candidate slider to define the truncation region 24 to a desired depth. One concern with this process is that the saw diameter is very large relative to the slider 10 (much larger than the relative diameter of the gang saw 70 shown in Fig. 9), and the extent of the cut being made must be controlled very precisely. Normally, the gang saw will cut the ballast rail 18 about 10 percent of its length or so from the trailing edge 14, in order to form the truncation region 24.
C. Row Bar Sawing. A third method is to cant the row bar to a predetermined angle and then use a gang saw to remove the slider material at the truncation region. This method is particularly attractive in slider-forming processes employing row bar canting and sawing in order to form the ramp regions 17 and 19 at the leading edge. There are several known drawbacks to this approach. One is that the row bar displacement angle must be precisely controlled. A second drawback is that sawing, more than lapping, tends to result chipped ramp surfaces. It is not essential that the entire corner of the slider 10 be removed at the truncation region 24. All that is needed is to provide sufficient space where air pressure can expand to a much lower level, and where the relieved region will not come into contact with the disk surface during any expected roll angle condition of operation.
D. Row Bar Grooving. In this method, the row bar 66 is rotated to a position as shown in Fig. 6B, and a saw is used to notch the row bar 66 on a selective basis. This approach may be desirable, where individual transducer testing carried out at the row bar level identifies those transducers 20 which meet specifications and enables the companion transducer of each to be removed.
E. Slider Level Grooving. This method calls for machining each slider 10 after it has been separated from the row bar 66. While this approach has a number of advantages in the sense that only good slider-transducers need be candidates for machining, individual machining of sliders reduces productivity in a manufacturing process dramatically, and increases costs.

Thus, it can be understood and appreciated that the transducer-slider 10 may be formed to have the desired flying characteristics and truncation region 24 with a least selective process as at the wafer level (A above) or with the most selective process at the slider level (E above), or with intermediate processes as at B-D above, depending upon process tolerances and desired yields. The air bearing surfaces of rails 16 and 18 may be provided with a suitable protective overcoat in any satisfactory manner, as described for example in U.S. Patents Nos. 5,159,508 and 5,175,658, the respective disclosures being incorporated herein by reference.

Recognizing that the rail truncation has only a required minimum depth of a few microinches in practice, but can extend over the entire slider depth offers a large range of options for creating the truncation region. As discussed above in process option A, the simplest scheme creates cuts of a depth equal to the truncation length at the wafer level process in a direction orthogonal to the row bar direction. This process removes the active transducer and the entire corner of the slider as shown in Figs. 1 and 8. Unfortunately, this simple process requires that all of the thin film transducers 20 be removed in a straight line, causing a potential yield reduction if some good transducers were removed, while bad transducers remained on the same candidate slider. Alternatively, the truncation may be carried out at the row bar level in a manner similar to the way the tapers on the air bearing at the slider leading edge are created. The row bar can be tilted at a slight angle with respect to the bearing surface, and a trailing edge taper created. In the row bar processing method a step grinder can be controlled to create the taper on either rail, enabling both up and down facing heads to be created on the same bar, depending on which transducer candidate 20A or 20B is determined by probe testing to be good. Slider machining is the most selective and least productive way to produce the desired truncation.

Having thus described embodiments of the invention, it will now be appreciated that the objects of the invention have been fully achieved, and it will be understood by those skilled in the art that many changes in construction and widely differing embodiments and applications of the invention will suggest themselves without departing from the spirit and scope of the invention. The disclosure and the description herein are purely illustrative and are not intended to be in any sense limiting.

## Claims

1. A hard disk drive transducer-slider assembly forming a controlled contact bearing with a rotating magnetic data storage disk surface comprising a flying plane on one surface thereof opposed to the magnetic data storage disk surface, and having a leading edge and a trailing edge, and having a pair of longitudinal, parallel rails and a loading point configured to provide controlled non-zero roll and pitch angles so that a trailing edge of an active rail of the pair of rails having a magnetic data transducer flies at a lowest altitude relative to the magnetic data storage disk surface.

2. The hard disk drive transducer slider assembly set forth in claim 1 wherein the active rail has a predetermined width, is congruent with a length of the slider assembly and has the magnetic data transducer at a trailing edge thereof, and wherein a ballast rail of the pair of rails has a width greater than the predetermined with and is truncated at the trailing edge of the slider assembly.

3. The hard disk drive transducer slider assembly set forth in claim 2 wherein the slider is relieved to define the pair of rails, and is relieved to define a truncation region adjacent to the ballast rail at the trailing edge.

4. The hard disk drive transducer slider assembly set forth in claim 2 wherein the slider assembly is grooved across the trailing edge adjacent to the other rail, thereby to define a truncation region adjacent to the ballast rail and the trailing edge.

5. A method for forming a transducer slider assembly for reading data from and writing data in controlled contact with a rotating magnetic media data storage disk surface comprising the steps of:
forming a multiplicity of candidate transducer elements as rows and columns upon a wafer of slider material,
separating the candidate transducer elements into row bars along wafer severance surfaces thereof, each row bar including a multiplicity of candidate transducer slider assemblies,
gang sawing an opposite wafer severance surface of the row bar along orthogonal cutting paths to define an active rail having a said transducer element at a trailing edge of the candidate transducer slider assembly, and a ballast rail,
removing a portion of the ballast rail at the trailing edge to define a truncation region,
separating the row bar into the multiplicity of candidate transducer slider assemblies, and
testing the separated candidate transducer slider assemblies to identify each usable transducer slider assembly.

6. The method for forming a transducer slider assembly set forth in claim 5 wherein the step of removing a portion of the ballast rail at the trailing edge to define a truncation region comprises the step of forming transverse grooves in the wafer of slider material following the step of forming a multiplicity of candidate transducer elements and before the step of separating the candidate transducer elements into row bars.

7. The method for forming a transducer slider assembly set forth in claim 5 wherein the step of removing a portion of the ballast rail at the trailing edge to define a truncation region comprises the step of gang sawing the row bar along orthogonal cutting paths to define the truncation region.

8. The method for forming a transducer slider assembly set forth in claim 5 wherein the step of removing a portion of the ballast rail at the trailing edge to define a truncation region comprises the step of rotating the row bar to a predetermined angle and gang sawing the row bar along a path following the predetermined angle to define the truncation region.

9. The method for forming a transducer slider assembly set forth in claim 5 wherein the step of removing a portion of the ballast rail at the trailing edge to define a truncation region comprises the step of cutting the ballast rail of each usable transducer slider assembly after it has been separated from the row bar and tested.
